# EUROPÄISCHE PATENTSCHRIFT

(11) **EP 1 082 388 B1**
(45) Veröffentlichungstag und Bekanntmachung des Hinweises auf die Patenterteilung: **29.05.2002**
(21) Anmeldenummer: 99915586.4
(22) Anmeldetag: 12.03.1999
(51) Int. Cl.: C08K 13/02, C08G 63/78

(54) **VERFAHREN ZUR HERSTELLUNG VON POLYALKYLENARYLATEN**
METHOD FOR PRODUCING POLYALKENE ARYLATES
PROCEDE DE PRODUCTION DE POLYALKYLENARYLATS

(30) Priorität: 21.03.1998 DE 19812557
(43) Veröffentlichungstag der Anmeldung: 14.03.2001
(73) Patentinhaber: BASF AKTIENGESELLSCHAFT, 67056 Ludwigshafen (DE)
(72) Erfinder: HEITZ, Thomas, D-67125 Dannstadt-Schauernheim (DE); KLATT, Martin, D-68165 Mannheim (DE)
(86) Internationale Anmeldenummer: EP9901634
(87) Internationale Veröffentlichungsnummer: WO9948967

(56) Entgegenhaltungen:
- WO-A-98/41559
- DE-A- 1 569 591
- DE-A- 3 031 491

## Beschreibung

Die Erfindung betrifft ein verbessertes Verfahren zur kontinuierlichen Herstellung von Schmiermittel und Nukleierungsmittel enthaltenden Polyalkylenarylaten.

Polyalkylenarylate zeichnen sich durch geringe Wasseraufnahme und gute Dimensionsstabilität sowie Beständigkeit gegenüber Lösungsmitteln aus.

Eine nachteilige Eigenschaft ist die geringe Kristallisationsgeschwindigkeit, welche Probleme bei der Verarbeitung von hochmolekularen oder sehr dünnwandigen Spritzgußteilen bereitet.

Durch Zugabe eines Nukleierungsmittels - gegebenenfalls in Kombination mit anderen Additiven - kann die Kristallisationsgeschwindigkeit verbessert werden, wie beispielsweise aus der EP-A 255 735, US-A 4 448 913, JP-A 62/275152 und JP-A 58/219255 bekannt ist.

Nukleierte Polyester werden nach dem Stand der Technik durch Einmischen der Additive z.B. auf dem Extruder hergestellt. Der zusätzliche Verfahrensschritt ist kostenintensiv und verursacht darüberhinaus eine thermische Schädigung des Polymers. Hinsichtlich der mechanischen Eigenschaften, insbesondere der multiaxialen Zähigkeit und der Farbbeständigkeit (Vergilbungsneigung) sind die bekannten Formmassen verbesserungswürdig.

Aufgabe der vorliegenden Erfindung war es daher, ein verbessertes kontinuierliches Verfahren zur Herstellung von Schmiermittel und Nukleierungsmittel enthaltenden Polyalkylenarylaten zur Verfügung zu stellen, welches wirtschaftlicher und weitestgehend ohne thermische Schädigung des Polymeren zu Polyestern mit verbesserten Eigenschaften führt. Insbesondere sollen die mechanischen Eigenschaften wie multiaxiale Zähigkeit und die Vergilbungsneigung verbessert werden, wobei eine bessere Verarbeitung durch schnelle Kristallisation gewährleistet sein soll.

Überraschenderweise wurde gefunden, daß diese Aufgabe dadurch gelöst werden kann, indem man eine aromatische Dicarbonsäure oder deren Ester bzw. esterbildende Derivate mit einem molaren Überschuß einer aliphatischen Dihydroxyverbindung verestert bzw. umestert und das erhaltene Umescerungs- bzw. Veresterungsprodukt polykondensiert, dadurch gekennzeichnet, daß man bei Erreichen von mindestens 80 % der gewünschten Viskositätszahl Schmiermittel B) und Nukleierungsmittel C) der Polymerschmelze zugibt und die Schmelze gegebenenfalls nachkondensiert und anschließend austrägt, abkühlt und granuliert.

Bevorzugte Ausführungsformen sind den Unteransprüchen zu entnehmen.

Als Komponente A) enthalten die erfindungsgemäß erhältlichen Formmassen 95 bis 99,9, vorzugsweise 96 bis 99,8 und insbesondere 98 bis 99,5 Gew.-% eines thermoplastischen Polyalkylenarylates.

Derartige Polyalkylenarylate sind erhältlich, indem man eine aromatische Dicarbonsäure oder deren Ester bzw. esterbildende Derivate mit einem molaren Überschuß, einer aliphatischen Dihydroxyverbindung verestert bzw. umestert und das erhaltene Umesterungsbzw. Veresterungsprodukt in bekannter Weise polykondensiert.

Als bevorzugte Dicarbonsäuren sind 2,6-Naphthalindicarbonsäure und Terephthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, "insbesondere 1,2-Ethandiol, 1.3-Propandiol, 1,4-Butandiol, 1,6-Hexandiol, 1,4-Hexandiol, 5-Methyl-l,5-Pentandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 10, vorzugsweise 2 bis 6 C-Atomen ableiten, zu nennen. Von diesen werden insbesondere Polyethylenterephthalat und Polybutylenterephthalat oder deren Mischungen bevorzugt.

Weiterhin bevorzugt sind Polyethylenterephthalate und Polybutylenterephthalate, welche bis zu 1 Gew.-%, bezogen auf A), vorzugsweise bis zu 0,75 Gew.-%- 1,6-Hexandiol und/oder 2-Methyl-1,5-Pentandiol als weitere Monomereinheiten enthalten.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Insbesondere bevorzugt sind Polyester, deren Carboxylendgruppengehalt bis zu 50 meq/kg. bevorzugt bis zu 30 meq/kg und insbesondere bis zu 27 meq/kg Polyester beträgt. Derartige Polyester können beispielsweise in Anlehnung an das Verfahren der DE-A 44 01 055 hergestellt werden. Der Carboxylendgruppengehalt wird üblicherweise durch Titrationsverfahren (z.B. Potentiometrie) bestimmt.

Die bevorzugte Herstellung erfolgt in Anlehnung an die DE-A 44 01 055 kontinuierlich, indem man
a) in einer ersten Stufe eine aromatische Dicarbonsäure oder deren Ester bzw. esterbildende Derivate mit einem molaren Überschuß einer Dihydroxyverbindung verestert bzw. umestert,
b) in einer zweiten Stufe das gemäß a) erhaltene Umesterungs- bzw. Veresterungsprodukt vorkondensiert und
c) in einer dritten Stufe das aus b) erhältliche Produkt auf die gewünschte Viskositätszahl polykondensiert, wobei man die Stufe a) und die Stufe b) des Verfahrens in mindestens zwei Temperaturzonen durchführt.

Die Stufe a) des Verfahrens wird als sogenannte Umesterungs- bzw. Veresterungsreaktion bezeichnet. Diese wird in mindestens zwei, vorzugsweise mindestens drei Temperaturzonen durchgeführt. Die Temperatur der folgenden Zone sollte hierbei 1-40, vorzugsweise 2-30 und insbesondere 5-10°C höher als die Temperatur der vorherigen Zone sein. Der Temperaturbereich für die gesamte Veresterungsreaktion liegt im allgemeinen (je nach Einsatzstoff) bei 165 bis 260, vorzugsweise 170 bis 250 und insbesondere bei 180 bis 240°C, der Druck beträgt im allgemeinen von 1 bis 10, vorzugsweise von 1 bis 4 und insbesondere von 1 bis 2 bar.

Vorzugsweise führt man die Stufe a) des Verfahrens so aus, daß man in mindestens zwei Temperaturzonen bei weitestgehend gleichen Druckverhältnissen in den einzelnen Zonen arbeitet. Die technischen Voraussetzungen wie Apparaturen (z.B. in Form von Kesselkaskaden) zur Schaffung von unterschiedlichen Temperaturzonen sind dem Fachmann bekannt, weshalb sich weitere Einzelheiten hierzu erübrigen.

Die Einsatzstoffe wie Diole und Säuren wurden bereits vorstehend (Komponente A) beschrieben.

Für die Umsetzung wird üblicherweise ein molarer Überschuß von Diol eingesetzt, um das Estergleichgewicht in der gewünschten Form zu beeinflussen. Die Molverhältnisse Dicarbonsäure bzw. Dicarbonsäureester : Diol betragen üblicherweise 1:1,1 bis 1:3,5 vorzugsweise 1:1,2 bis 1:2,2. Ganz besonders bevorzugt sind Molverhältnisse Dicarbonsäure:Diol von 1:1,5 bis 1:2, sowie Diester:Diol von 1:1,2 bis 1,5.

Es ist jedoch auch möglich mit einem geringeren Überschuß an Diol in der ersten Zone die Esterreaktion durchzuführen und entsprechend in den weiteren Temperaturzonen weitere Mengen Diol zuzugeben. In der bevorzugten Ausführungsform des erfindungsgemäßen Verfahrens mit drei Temperaturzonen wird das gesamte Diol in 3 Zonen prozentual wie folgt aufgeteilt: 60 bis 85 (1), 10 bis 25 (2) und 5-15 (3), vorzugsweise: 70 bis 80 (1), 10 bis 20 (2), 5 bis 10 (3).

Die Verweilzeiten betragen für die gesamte Stufe a) 140 bis 300, vorzugsweise von 150 bis 260 und insbesondere von 160 bis 220 Min., die Verweilzeit für die erste Zone beträgt von 100 bis 190, vorzugsweise von 110 bis 150; für die zweite Zone von 65 bis 140, vorzugsweise von 65 bis 110 Min. Für die bevorzugte Ausführungsform mit 3 Zonen beträgt die Verweilzeit in der 3. Zone 15 bis 45, vorzugsweise 15 bis 30 Min, wobei sich die Verweilzeiten in der 2. Zone entsprechend verringern und in der 1. Zone wie oben ausgeführt beibehalten werden.

In der bevorzugten Ausführungsform des erfindungsgemäßen Verfahrens nehmen die Verweilzeiten von der ersten Zone zur dritten Zone im Verhältnis vorzugsweise 6:3:1 ab.

Vor der Stufe a) des Verfahrens wird in einer besonders bevorzugten Ausführungsform zur Dihydroxyverbindung zunächst ein Katalysator und anschließend eine (Erd)alkalimetallverbindung zugesetzt.

Bevorzugte Katalysatoren sind Titanverbindungen und Zinnverbindungen wie sie u.a. aus den US 39 36 421, US 43 29 444 Patentschriften bekannt sind. Als bevorzugte Verbindungen seien Tetrabutylorthotitanat und Triisopropyltitanat sowie Zinn-di-octoat genannt, welche üblicherweise in der Stufe a) in Mengen von 20 bis 250 ppm (bezogen auf das Metall) eingesetzt werden.

Zur weiteren Reduzierung des Carboxylendgruppengehaltes des Polyesters kann es vorteilhaft sein, vor der Umsetzung der Ausgangsmonomeren 0,1 bis 10 mmol, vorzugsweise 0,2 bis 0,65 mmol, pro kg Polyester, einer Alkalimetallverbindung oder Erdalkalimetallverbindung (berechnet als Alkalimetall bzw. Erdalkalimetall) zuzugeben. Derartige Verbindungen werden in der DE-A 43 33 930 vorgeschlagen. Als bevorzugte Verbindungen seien Natriumcarbonat, Natriumacetat, und Natriumalkoholate, insbesondere Natriummethanolat genannt.

Die Umesterungs- bzw. Veresterungsprodukte werden anschließend in die Vorkondensationsstufe b) kontinuierlich überführt.

Diese weist mindestens zwei, vorzugsweise mindestens drei und insbesondere mindestens vier Temperaturzonen auf. Die Temperatur der folgenden Zone liegt hierbei 1 bis 40, vorzugsweise 2- 30 und insbesondere 5-20°C höher als die Temperatur der vorherigen Zone. Der Temperaturbereich für die gesamte Vorkondensation liegt im allgemeinen (je nach Einsatzstoffen ) bei 220 bis 300, vorzugsweise bei 225 bis 290 und insbesondere bei 240 bis 290°C.

Bevorzugt erfolgt die Vorkondensation in der Weise, daß in der ersten Zone der Druck 0,5 bis 1 bar, vorzugsweise 0,6 bis 0,8 bar beträgt und in der zweiten bzw. letzten Zone 20 bis 200, vorzugsweise 25 bis 150 mbar und insbesondere 50 bis 150 mbar beträgt. Technisch kann hierfür z.B. ein senkrecht stehender Rohrbündelreaktor verwendet werden, andere Reaktoren zur Durchführung sind dem Fachmann bekannt.

Die Verweilzeiten betragen für die gesamte Stufe b) des Verfahrens von 10 bis 80, vorzugsweise von 15 bis 50 und insbesondere von 20 bis 40 Min.

In einer besonders bevorzugten Ausführungsform des erfindungsgemäßen Verfahrens werden vier Temperaturzonen verwendet, wobei von Zonen zu Zone die Temperatur in den oben beschriebenen Verhältnissen steigt und der Druck von der ersten bis zur vierten Zone innerhalb der beschriebener. Grenzen reduziert wird. Die vierte Zone besteht bei dieser bevorzugten Ausführungsform des Rohrbündelwärmetauschers aus einer Vorrichtung zur Trennung von Dampf- und Flüssigphase (auch als Brüdentrenngefäße bezeichnet), wobei das Verhältnis des Volumens des Trenngefäßes zum Volumen in den Rohren vorzugsweise 5 bis 15: 1, insbesondere 8 bis 12: 1 beträgt.

Die Volumenverhältnisse der ersten drei Zonen sind in dieser besonders bevorzugten Ausführungsform so gestaltet, daß die erste Zone von 30 bis 60, vorzugsweise 50 %, die zweite Zone von 20 bis 40, vorzugsweise 30 % und die dritte Zone von 10 bis 30, vorzugsweise 20 % anteilig an Volumen (Volumenverhältnisse) ausmachen. Nachstehend sind die Temperaturbereiche , Druckbereiche und Verweilzeiten für die besonders bevorzugte Ausführungsform des erfindungsgemäßen Verfahrens aufgeführt:
1. Zone: Temperatur von 230 bis 270, vorzugsweise von 240 bis 250°C, Druck von 0,6 bis 0,9, vorzugsweise von 0,7 bis 0,9 bar.
   Verweilzeit von 10 bis 30, vorzugsweise von 15 bis 25 Min.
2. Zone: Temperatur von 240 bis 280; vorzugsweise von 250 bis 270°C, Druck von 0,2 bis 0,6, vorzugsweise von 0,3 bis 0,5 bar.
   Verweilzeit von 5 bis 25, vorzugsweise von 7 bis 15 Min.
3. Zone: Temperatur von 245 bis 290 vorzugsweise von 250 bis 280°C, Druck von 0,1 bis 0,3, vorzugsweise von 0,1 bis 0,25 bar.
   Verweilzeit von 5 bis 10, vorzugsweise von 4 bis 8 Min.
4. Zone: Temperatur von 250 bis 300 vorzugsweise von 252 bis 285°C, Druck von 0,015 bis 0,2, vorzugsweise von 0,025 bis 0,15 bar.
   Verweilzeit von 10 bis 30, vorzugsweise von 14 bis 24 Min.

Die vorstehend bei Stufe a) des Verfahrens genannten Katalysatoren und weitere Zusatzstoffe können in den genannten Mengen in die Stufe b) des Verfahrens zudosiert werden.

Nach der Stufe b) des erfindungsgemäßen Verfahrens weist das Polyesterpräpolymer eine Viskositätszahl von 15 bis 50, vorzugsweise von 20 bis 30 ml/g auf, gemessen als 0,5 Gew.-% Lösung in Phenol/o-Dichlorbenzol (1:1) gemäß DIN 53728, Teil 3 (1985) bei 25°C.

Das Polyesterpräpolymer wird anschließend in die Stufe c) des erfindungsgemäßen Verfahrens überführt. Diese wird vorzugsweise einstufig durchgeführt bei Temperaturen von 240 bis 290, vorzugsweise von 240 bis 270 und insbesondere 240 bis 265°C. Der Druck beträgt von 0,3 bis 10, vorzugsweise 0,3 bis 5 und insbesondere 0,3 bis 2 mbar.

Die Verweilzeiten betragen üblicherweise 30 bis 180, vorzugsweise von 35 bis 150 Min.

während der Polykondensation kann man vorzugsweise eine Oberflächenerneuerung des Produktes vornehmen. Oberflächenerneuerung bedeutet, daß ständig neues Polymeres an die Oberfläche der Schmelze gelangt, so daß der Austritt des Diols erleichtert wird.

Diese beträgt vorzugsweise 1 bis 20 und insbesondere 1,5 bis 6 m²/kg Produkt und Minute.

Es kann weiterhin von Vorteil sein, auch in dieser Stufe des Verfahrens Katalysatoren und andere Zusatzstoffe zuzugeben, wie sie vorstehend beschrieben wurden.

Nach der kontinuierlichen Polykondensation weist der Polyester eine Viskositätszahl von 60 bis 180, vorzugsweise von 90 bis 160 ml/g auf, bestimmt in einer 0,5 gew.%igen Lösung in einem Phenol/o-Dichlorbenzolgemisch (Gew.-Verh. 1:1 bei 25°C) gemäß DIN 53728, 3. Teil (1985).

Wesentlich beim erfindungsgemäßen Verfahren ist, daß man bei Erreichen von mindestens 80 %, vorzugsweise mindestens 95 % und insbesondere 100 % der gewünschten Endviskositätszahl des Polyesters Schmiermittel B) und Nukleierungsmittel C) der Polymerschmelze gemeinsam zugibt, die Schmelze gegebenenfalls nachkondensiert und anschließend austrägt, abkühlt und granuliert. Vorzugsweise erfolgt die Zugabe des Schmiermittels B) in einer Menge von 0,01 bis 3, vorzugsweise 0,1 bis 1 und insbesondere 0,2 bis 0,8 Gew.-% und das Nukleierungsmittel C) in einer Menge von 0,001 bis 2, vorzugsweise von 0,01 bis 1 und insbesondere von 0,03 bis 0,5 Gew.-%, bezogen auf 100 Gew.-% der Komponenten A) bis C).

Insbesondere bevorzugt erfolgt die Zugabe in Form einer Suspension, wobei man das Nukleierungsmittel vor der Zugabe zur Schmelze gegebenenfalls bei erhöhter Temperatur im Schmiermittel suspendiert. Je nach Art des eingesetzten Schmiermittels kann es zur Herstellung einer Suspension erforderlich sein, die Mischung aus Schmiermittel und Nukleierungsmittel vorab auf Temperaturen von 30 bis 150, vorzugsweise von 60 bis 130°C zu erhitzen und anschließend zur Polymerschmelze zuzugeben.

Als Beispiel hierfür seien niedermolekulare Polyethylenwachse genannt, welche bekanntlich bei Raumtemperatur in fester Form vorliegen und zur Herstellung einer Suspension mit dem Nukleierungsmittel erhitzt werden müssen.

Die Zugabe der Komponenten B) und C) erfolgt vorzugsweise während der Polykondensation bei Erreichen von mindestens 80 % der gewünschten Endviskositätszahl. Geeignete Polykondensationsvorrichtungen sind dem Fachmann bekannt, weshalb sich weitere Einzelheiten hierzu erübrigen. In einer besonders bevorzugten Ausführungsform des erfindungsgemäßen Verfahrens kann man die Schmelze aus dem Polykondensationsreaktor austragen, über geeignete Vorrichtungen, z.B. Dosierpumpe mit Heizung, die Mischung aus B) und C) zugeben und die Polymerschmelze anschließend in z.B. ein Sulzerrohr überführen und auf die gewünschte Endviskositätszahl kondensieren, wobei eine Homogenisierung der Schmelze erfolgt, und anschließend austragen, kühlen und granulieren.

Geeignete Schmiermittel B) sind niedermolekulare Polyethylenwachse, welche vorzugsweise funktionelle Gruppen, wie Glycidyl- und/oder Carboxylgruppe enthalten können, mit einem mittleren Molekulargewicht Mₙ (Zahlenmittel) von 500 bis 20 000, vorzugsweise 1 000 bis 10 000, insbesondere 1 000 bis 5 000 und ganz besonders 1 000 bis 3 000 g/mol.

Das Molekulargewicht wird üblicherweise durch Gelpermeationschromatografie (GPC) mit LDPE-Standard bestimmt. Die Schmelzviskosität beträgt vorzugsweise von 10 bis 10 000, vorzugsweise 100 bis 5 000, insbesondere 100 bis 3 000 und ganz besonders 100 bis 2 000 mm²/g (gemäß DIN 51 562) bei einer Temperatur von 120°C.

Bei den säure- oder epoxygruppenhaltigen Polyethylenen kann es sich um Copolymere von Ethylen mit a,β-ungesättigten Säure- oder Epoxyverbindungen handeln oder auch um Polyethylene auf die Säure- oder Epoxyverbindungen aufgepfropft werden.

Die Polyethylene können nach dem Hoch-, Mittel- oder Niederdruckverfahren hergestellt werden. Es können sowohl Polyethylene hoher Dichte (HDPE) (Bereich von 0,94 bis 0,97 g/cm³), bevorzugt hergestellt nach dem sog. Phillips-Verfahren (Mitteldruckverfahren), als auch Polyethylene niedriger Dichte (LDPE) (Bereich von 0,91 bis 0,94 g/cm³), insbesondere lineare Polyethylene niedriger Dichte, bevorzugt hergestellt nach dem Gasphasenverfahren, eingesetzt werden.

Verfahren zur Herstellung derartiger Copolymere sind dem Fachmann bekannt (z.B. Ullmanns Enzyklopädie der Technischen Chemie, 4. Aufl., Bd. 19, S. 169-175).

Geeignete Produkte sind im Handel unter dem Warenzeichen Luwax® (BASF AG), Hoechst-Wachs® PED 191 oder H12 (Hoechst AG) sowie Poligen® EAS-1 (BASF AG) erhältlich.

Weitere Schmiermittel sind Ester oder Amide gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein, wobei nicht alle OH-Gruppen verestert sein müssen. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Nukleierungsmittel C) eignen sich insbesondere Mineralien aus der Gruppe der Alkali und/oder Erdalkali(alumo) silikate, bevorzugt aus der Gruppe der Inselsilikate oder Schichtsilikate.

Es können alle möglichen Verbindungen wie Hydroxide, Carbonate, Hydroxycarbonate, Sulfate, Silikate sowie Phosphate und Phosphonate verwendet werden.

Insbesondere sind Magnesiumsilikate in unterschiedlichen Mischungsverhältnissen geeignet, wobei Talkum bevorzugt ist.

Typische Zusammensetzungen von Talkum sind üblicherweise durch Elementaranalyse bestimmbar und enthalten als wesentliche Bestandteile SiO₂, MgO, Al₂O₃, Fe₂O₃, CaO (nach Verbrennen).

Insbesondere bevorzugtes Nukleierungsmittel C) ist Talkum, welches vorzugsweise eine Teilchengröße (d₉₀-Wert) kleiner als 150 µm, vorzugsweise kleiner 100 µm und insbesondere kleiner 50 µm, aufweist.

Als weitere geeignete Nukleierungsmittel seien Alkali- oder Erdalkalisalze von organischen oder anorganischen Säuren genannt wie beispielsweise Natriumantimonat, Calciumstearat, Natriumterephthalat, Calciumcitrat sowie Metallasäuren (basische Säuren) des Titans oder Wolframs.

Geeignete Derivate von anorganischen Säuren sind vorzugsweise Phosphorsäurederivate, wobei Natriumphenylphosphinat, Zinkphosphat, Calcium (bis -3,5-Ditertbutylethylphosphonat (Irganox® 1425 der Firma Ciba Geigy AG) sowie Tetrakis (2,4-ditertbutylphenyl)-4,4'-biphenylendiphosphonit) besonders bevorzugt sind.

Die gemäß dem vorstehend beschriebenen Verfahren erhältlichen Polyester zeigen verbesserte mechanische Eigenschaften, insbesondere multiaxiale Zähigkeit, eine geringere Vergilbungsneigung und lassen sich besser verarbeiten, da die Kristallisationsneigung wesentlich verbessert ist.

### Beispiele

### Beispiel 1

In einer kontinuierlichen Weise wurden 881,8 g DMT und 563,7 g 1,4-Butandiol in eine Reaktionszone eingespeist. In das Butandiol wurde dabei kontinuierlich vor Kontaktieren des DMT mit 781,8 mg Tetrabutylorthotitanat und 99 Mikroliter einer 30 Gew.-% Lösung von NaOCH₃ in Methanol eingemischt.

Die Temperatur in der ersten Reaktionszone betrug 185°C bei einem Druck von 1 bar und einer mittleren Verweilzeit von 182 min.

Die Temperatur in der zweiten Reaktionszone betrug 205°C bei einem Druck von 1 bar und einer mittleren Verweilzeit von 63 min.

Die Temperatur in der dritten Reaktionszone betrug 210°C bei einem Druck von 1 bar und einer mittleren Verweilzeit von 40 min.

Die hierbei anfallenden Destillate, welche BDO, DMT, THF und Wasser enthielten, wurden in einem Kolonnensystem getrennt, wobei DMT und BDO in die Reaktion zurückgeführt wurden. Mit einem Umsatz von 93 % wurde das Umesterungsprodukt einem senkrecht stehenden Rohr zugeführt, das in vier. Heizzonen unterteilt war.

Die Temperatur in der vierten Reaktionszone betrug 247°C bei einem Druck von 700 mbar und einer mittleren Verweilzeit von 22 min.

Die Temperatur in der fünften Reaktionszone betrug 252°C bei einem Druck von 400 mbar und einer mittleren Verweilzeit von 11 min.

Die Temperatur in der sechsten Reaktionszone betrug 255°C bei einem Druck von 150 mbar und einer mittleren Verweilzeit von 5 min.

Die Temperatur in der siebten Reaktionszone betrug 256°C bei einem Druck von 30 mbar und einer mittleren Verweilzeit von 18 min.

Das überschüssige BDO und die Reaktionsprodukte wie THF und Wasser wurden am oberen Ende des Reaktionsrohres abgetrennt. Das Vorkondensat wurde ohne weitere Zugabe von Katalysatoren in einen Polykondensationsreaktor (Zone 8) überführt.

Die Temperatur in der achten Reaktionszone betrug 257°C bei einem Druck von 0,4 mbar, einer mittleren Verweilzeit von 115 min und einer Oberflächenerneuerung von 4 m²/h^{*}kg PBT.

Nach Austritt aus der achten Reaktionszone wurde der 257°C heißen Schmelze (100 % der Endviskositätszahl) eine Suspension von 0,46 g Talkum-Pulver in 4,6 g eines geschmolzenen Pentaaerythritesters der Stearinsäure bei 90°C in kontinuierlicher weise zugegeben und über einen statischen Mischer homogenisiert.

Das erhaltene Produkt besaß eine Viskositätszahl von 130 und einen CEG von 21 meq/kg, einen Gelbgrad von dB 1,3 gegen Weißstandard, ein Kristallisationsmaximum von 189°C und eine Halbwertsbreite der Kristallisationsisotherme von 5°C.

### Beispiel 2

In einer kontinuierlichen Weise wurden 694,1 g TPA und 790,7 g 1,4-Butandiol in eine Reaktionszone eingespeist. In das Butandiol wurde dabei kontinuierlich vor Kontaktieren des DMT mit 313,9 mg Tetrabutylorthotitanat und 114 Mikroliter einer 30 Gew.-% Lösung von NaOCH₃ in Methanol eingemischt.

Die Temperatur in der ersten Reaktionszone betrug 220°C bei einem Druck von 1 bar und einer mittleren Verweilzeit von 182 min.

Die Temperatur in der zweiten Reaktionszone betrug 222°C bei einem Druck von 1 bar und einer mittleren Verweilzeit von 65 min.

Die Temperatur in der dritten Reaktionszone betrug 224°C bei einem Druck von 1 bar und einer mittleren Verweilzeit von 41 min.

In die dritte Reaktionszone wurde dabei kontinuierlich ein Strom von 470,8 mg Tetrabutylorthotitanat als 60 Gew.-% Lösung in BDO eingemischt.

Die hierbei anfallenden Destillate, welche BDO, THF und Wasser enthielten, wurden in einem Kolonnensystem getrennt, wobei BDO in die Reaktion zurückgeführt wurde. Mit einem Umsatz von 94 % wurde das Umesterungsprodukt einem senkrecht stehenden Rohr zugeführt, das in vier Heizzonen unterteilt war.

Die Temperatur in der vierten Reaktionszone betrug 246°C bei einem Druck von 700 mbar und einer mittleren Verweilzeit von 22 min.

Die Temperatur in der fünften Reaktionszone betrug 250°C bei einem Druck von 400 mbar und einer mittleren Verweilzeit von 12 min.

Die Temperatur in der sechsten Reaktionszone betrug 255°C bei einem Druck von 150 mbar und einer mittleren Verweilzeit von 5 min.

Die Temperatur in der siebten Reaktionszone betrug 258°C bei einem Druck von 30 mbar und einer mittleren Verweilzeit von 18 min.

Das überschüssige BDO und die Reaktionsprodukte wie THF und Wasser wurden am oberen Ende des Reaktionsrohres abgetrennt und aufgearbeitet. Das Vorkondensat wurde ohne weitere Zugabe von Katalysatoren in einen Polykondensationsreaktor (Zone 8) überführt.

Die Temperatur in der achten Reaktionszone betrug 256°C bei einem Druck von 0,4 mbar, einer mittleren Verweilzeit von 117 min und einer Oberflächenerneuerung von 4,2 m²/h*kg PBT.

Nach Austritt aus der achten Reaktionszone wurde der 256°C heißen Schmelze (100 % der Endviskositätszahl) eine Suspension von 0,46 g Talkum-Pulver in 4,6 g eines geschmolzenen Pentaaerythritesters der Stearinsäure bei 90°C in kontinuierlicher Weise zugegeben und über einen statischen Mischer homogenisiert.

Das erhaltene Produkt besaß eine Viskositätszahl von 132 und einen CEG von 18 meq/kg, einen Gelbgrad von dB 1,2 gegen Weißstandard, ein Kristallisationsmaximum von 188°C und eine Halbwertsbreite der Kristallisationsisotherme von 4,9°C.

### Vergleichsbeispiel A

Das Experiment wurde wie in Beispiel 1 beschrieben durchgeführt, wobei die Schmelze des Polymeren nach Austritt aus der achten Reaktionszone sofort granuliert wurde.

Das Granulat wurde mit der entsprechenden Menge des Esters und des Minerals (wie in den Beispielen beschrieben) auf einem Zweischneckenkneter ZSK 25 bei 250°C) compoundiert. Die Komponenten wurden dabei vor der Compoundierung auf das Granulat aufgetrommelt.

Das erhaltene Granulat besaß eine Viskositätszahl von 123 und einen CEG von 31 meq/kg, einen Gelbgrad von dB 2,0 gegen Weißstandard und eine Halbwertsbreite der Kristallisationsisotherme von 5,2°C.

### Verarbeitung zu Formteilen

Die aus den Beispielen 1 und 2 sowie dem Vergleichsbeispiel A erhaltenen Produkte wurden im Spritzguß zu den für die Zähigkeitsprüfungen benötigten Formkörpern verarbeitet. Die Massetemperatur betrug 260°C.

| Produkt aus Versuch | 1 | 2 | Vergleich |
|---|---|---|---|
| Lösungsviskosität VZ [ml/g] | 130 | 132 | 123 |
| VZ Formkörper | 128 | 129 | 121 |
| CEG (meq/kg) am Granulat | 21 | 18 | 31 |
| CEG (meq/kg) am Formkörper | 23 | 22 | 33 |
| Yellowness Index YI DIN 5033 | 9,9 | 11,1 | 11,3 |
| Temperatur der maximalen Kristallisation | 189 | 188 | 186 |
| Halbwertsbreite des Krist. peaks | 5,0 | 4,9 | 5,4 |
| Schlagzähigkeit [kJ/m²] ISO 179 | >250 | >250 | 250^{(a)} |
| Multiaxiale Zähigkeit [Nm] ISO 6603-2 | 35,8 | 34,5 | 30,8 |
| Vergilbung YI nach Belichtung | 45,2 | 48,6 | 56,7 |

| | | | |
|---|---|---|---|
| ^{(a)} von 10 Testkörpern 2 Stäbe gebrochen | | | |

Die Viskositätszahl wurde bei 25°C an einer 0,5 % Lösung des Polymeren in einem 1:1-Gemisch aus Phenol/o-Dichlorbenzol gemessen.

Die Kristallisation wurde mittels DSC nach einmaligem Aufschmelzen bis 250°C mit einer Kühlrate von 20°C/min gemessen. Die Halbwertsbreite wurde bestimmt als Breite des Kristallisationspeaks (in °C) gemessen bei halber Höhe zwischen Basislinie und Peakmaximum.

Die Carboxylendgruppen (CEG) wurde durch potentiometrische Titration der bei Umsetzen einer in Nitrobenzol gelösten Probe des Polymeren mit einem definierten Überschuß an Kaliumacetat freigesetzten Essigsäure bestimmt.

Die Belichtung wurde nach DIN 53387 an der spritzgegossenen Rundscheibe bei Belichtung mit einer Intensität von 60 w/m² mit Licht der Wellenlänge von 290 bis 400 nm im UV-Belichtungsgerät (Heraeus X1200 CPS) über 2 000 h durchgeführt.

Die Vergilbung wurde nach DIN 5033 an der belichteten Rundscheibe gemessen und mit der unbelichteten Probe verglichen. Die Messung erfolgte in Reflektion mit Normlicht D65 unter einem Beobach- - tungswinkel von 10°. Angegeben ist der Yellowness-Index YI = (131,84*x-116-46*z)/Y.

Die Schlagzähigkeit wurde im Schlagbiegeversuch nach ISO 179 am Probekörper 1eU bei 23°C (Charpy) gemessen.

Die multiaxiale Zähigkeit wurde im Durchstoßversuch nach ISO 6603-2 an der Rundscheibe 60 mm x 2 mm bei 23°C gemessen.

## Patentansprüche

1. Kontinuierliches Verfahren zur Herstellung von Schmiermittel und Nukleierungsmittel enthaltenden Polyalkylenarylaten A), in dem man eine aromatische Dicarbonsäure oder deren Ester bzw. esterbildende Derivate mit einem molaren Überschuß einer aliphatischen Dihydroxyverbindung in mindestens 2 Temperaturen verestert bzw. umestert und das erhaltene Umesterungs- bzw. Veresterungsprodukt polykondensiert, **dadurch gekennzeichnet, daß** man bei Erreichen von mindestens 80 % der gewünschten Viskositätszahl Schmiermittel B) und Nukleierungsmittel C) der Polymerschmelze zugibt und die Schmelze gegebenenfalls nachkondensiert und anschließend austrägt, abkühlt und granuliert.

2. Verfahren nach Anspruch 1, **dadurch gekennzeichnet, daß** man das Schmiermittel B) in einer Menge von 0,01 bis 3 Gew.-% und das Nukleierungsmittel C) in einer Menge von 0,001 bis 2 Gew.-%, bezogen auf 100 Gew.-% der Komponenten A) bis C), zugibt.

3. Verfahren nach den Ansprüchen 1 oder 2, **dadurch gekennzeichnet, daß** man das Nukleierungsmittel vor der Zugabe zur Schmelze gegebenenfalls bei erhöhter Temperatur im Schmiermittel suspendiert.

4. Verfahren nach Anspruch 3, **dadurch gekennzeichnet, daß** man die Suspension bei Temperaturen von 30 bis 150°C herstellt und zur Polymerschmelze zugibt.

5. Verfahren nach den Ansprüchen 1 bis 4, **dadurch gekennzeichnet, daß** man ein Polyalkylenterephthalat einsetzt.

6. Verfahren nach den Ansprüchen 1 bis 5, **dadurch gekennzeichnet, daß** man als Nukleierungsmittel ein Mineral ausgewählt aus der Gruppe der Alkali- oder Erdalkali(alumo)silikate oder deren Mischungen einsetzt.

7. Verfahren nach den Ansprüchen 1 bis 6, **dadurch gekennzeichnet, daß** man Talkum als Nukleierungsmittel einsetzt.

8. Verfahren nach den Ansprüchen 1 bis 7, **dadurch gekennzeichnet, daß** man als Schmiermittel Ester oder Amide von Carbonsäuren mit 10 bis 40 C-Atomen oder deren Mischungen einsetzt.

9. Verfahren nach den Ansprüchen 1 bis 8, **dadurch gekennzeichnet, daß** man als Schmiermittel Pentaerythrittetrastearat einsetzt.

## Claims

1. A continuous process for preparing polyalkylene arylates A) comprising lubricant and nucleating agent, by esterifying or transesterifying an aromatic dicarboxylic acid or esters or ester-forming derivatives thereof with a molar excess of an aliphatic dihydroxy compound in at least two temperature zones, and polycondensing the resultant transesterification or esterification product, which comprises, on achieving at least 80% of the desired viscosity number, adding lubricant B) and nucleating agent C) to the polymer melt and, where appropriate, post-condensing the melt, and then discharging, cooling, and pelletizing the same.

2. A process as claimed in claim 1, wherein, based on 100% by weight of components A) to C), the amount of the lubricant B) added is from 0.01 to 3% by weight, and the amount of the nucleating agent C) added is from 0.001 to 2% by weight.

3. A process as claimed in claim 1 or 2, wherein, prior to addition to the melt, the nucleating agent is suspended in the lubricant where appropriate at an elevated temperature.

4. A process as claimed in claim 3, wherein the suspension is prepared at from 30 to 150°C and added to the polymer melt.

5. A process as claimed in any of claims 1 to 4, wherein use is made of a polyalkylene terephthalate.

6. A process as claimed in any of claims 1 to 5, wherein the nucleating agent used comprises a mineral selected from the group consisting of the alkali metal (alumino)silicates and alkaline earth metal (alumino)silicates and mixtures of these.

7. A process as claimed in any of claims 1 to 6, wherein the nucleating agent used comprises talc.

8. A process as claimed in any of claims 1 to 7, wherein the lubricant used comprises esters or amides of carboxylic acids having from 10 to 40 carbon atoms, or a mixture of these.

9. A process as claimed in any of claims 1 to 8, wherein the lubricant used comprises pentaerythritol tetrastearate.

## Revendications

1. Procédé continu de préparation de poly(arylates d'alkylène) A) contenant des lubrifiants et des agents de nucléation, dans lequel on estérifie et/ou transestérifie un acide dicarboxylique aromatique ou ses esters ou dérivés estérogènes avec un excès molaire d'un composé dihydroxylé aliphatique à au moins 2 températures, et l'on polycondense le produit de transestérification et/ou d'estérification, **caractérisé en ce qu'**une fois atteints au moins 80% de l'indice de viscosité souhaité, on ajoute au polymère fondu des lubrifiants B) et des agents de nucléation C) et que l'on post-condense éventuellement la masse fondue , après quoi celle-ci est déchargée, refroidie et granulée.

2. Procédé selon la revendication 1, **caractérisé en ce que** l'on ajoute le lubrifiant B) en une quantité de 0,01 à 3% en poids et l'agent de nucléation C) en une quantité de 0,001 à 2% en poids, par rapport à 100% en poids des composants A) à C).

3. Procédé selon les revendications 1 ou 2, **caractérisé en ce que** l'on met en suspension l'agent de nucléation dans le lubrifiant, avant l'addition à la masse fondue, éventuellement à température élevée.

4. Procédé selon la revendication 3, **caractérisé en ce que** l'on prépare la suspension à des températures de 30 à 150°C et qu'on l'ajoute à le masse fondue de polymère.

5. Procédé selon les revendications 1 à 4, **caractérisé en ce que** l'on met en oeuvre un poly(téréphtalate d'alkylène).

6. Procédé selon les revendications 1 à 5, **caractérisé en ce que** l'on met en oeuvre en tant qu'agent de nucléation un minéral choisi dans le groupe des (alumino)silicates de métaux alcalins ou alcalino-terreux, ou leurs mélanges.

7. Procédé selon les revendications 1 à 6, **caractérisé en ce que** l'on utilise du talc comme agent de nucléation.

8. Procédé selon la revendication 1 à 7, **caractérisé en ce que** l'on utilise comme lubrifiant des esters ou des amides d'acides carboxyliques comportant de 10 à 40 atomes de carbone, ou leurs mélanges.

9. Procédé selon les revendications 1 à 8, **caractérisé en ce que** l'on utilise comme lubrifiant du tétrastéarate de pentaérythrite.
